Europäisches Patentamt

European Patent Office

Office européen des brevets

(11) Veröffentlichungsnummer : **0 023 337**
**B1**

(12) **EUROPÄISCHE PATENTSCHRIFT**

(45) Veröffentlichungstag der Patentschrift :
26.01.83

(21) Anmeldenummer : **80104286.2**

(22) Anmeldetag : **21.07.80**

(51) Int. Cl.³ : **G 01 N 21/13, G 01 N 21/25**

(54) **Polychromatisches Photometer.**

(30) Priorität : 26.07.79 DE 2930431

(43) Veröffentlichungstag der Anmeldung :
04.02.81 Patentblatt 81/05

(45) Bekanntmachung des Hinweises auf die Patenterteilung : 26.01.83 Patentblatt 83/04

(84) Benannte Vertragsstaaten :
AT BE CH DE FR GB IT LI LU NL SE

(56) Entgegenhaltungen :
US A 3 609 047
US A 3 833 304
US A 4 090 791

(73) Patentinhaber : **BOEHRINGER MANNHEIM GMBH**
**Sandhofer Strasse 112-132 Postfach 31 01 20**
**D-6800 Mannheim 31-Waldhof (DE)**

(72) Erfinder : **Haar, Hans-Peter, Dr.**
**Trifthofstrasse 17**
**D-8120 Weilheim (DE)**
Erfinder : **Edelmann, Hermann**
**Diemendorfer Strasse 21**
**D-8132 Tutzing-Unterzeismering (DE)**
Erfinder : **Klose, Dr. Sigmar**
**Maxhöhe 17**
**D-8131 Berg (DE)**

(74) Vertreter : **Weickmann, Heinrich, Dipl.-Ing. et al**
**Patentanwälte Dipl.-Ing. H. Weickmann Dipl.-Phys.Dr.**
**K. Fincke Dipl.-Ing. F.A. Weickmann Dipl.-Chem. B.**
**Huber Dr.-Ing. H. Liska Möhlstrasse 22**
**D-8000 München 86 (DE)**

## Polychromatisches Photometer

Die Erfindung betrifft ein polychromatisches Photometer, mit einem mehrere auf einem Kreis im gleichen Winkelabstand angeordnete Proben tragenden Probenrad, einem mehrere auf einem Kreis im gleichen Winkelabstand angeordnete Filter tragenden Filterrad und einer Antriebseinrichtung, die das Probenrad und das Filterrad jeweils um eine normal zur Kreisebene durch das Kreiszentrum verlaufende Achse dreht und jede Probe des Probenrads nacheinander zusammen mit wechselnden, verschiedenen Filtern des Filterrades in den optischen Strahlengang eines photometrischen Meßgeräts bringt.

Ein Photometer dieser Art ist aus « American Laboratory » Februar 1979, Seiten 19 bis 28 bekannt. Das Probenrad ist vom Zentrifugaltyp und wird von einem Motor mit einer Drehzahl angetrieben, bei der die in Küvetten des Probenrads eingefüllten Proben den radialen Außenbereich der Küvetten aufgrund der Zentrifugalkraft vollständig ausfüllen. Das Filterrad wird von einem gesonderten Motor entsprechend dem vorgegebenen Programm eines Mikrocomputers eingestellt.

Mit Hilfe des bekannten Photometers können die Proben nacheinander bei unterschiedlichen, durch die Filter des Filterrads bestimmten Lichtwellenlängen untersucht werden. Bei einer Vielzahl Anwendungsfälle kommt es jedoch darauf an, daß diese Untersuchung in möglichst kurzer Zeit durchgeführt wird.

Aus der US-A-4 090 791 ist ein monochromatisches Photometer mit einem mehrere Proben tragenden Probenrad und einem mehrere Filter tragenden Filterrad bekannt. Die Proben des Probenrads und die Filter des Filterrads sind in gleichen Winkelabständen auf jeweils einem Kreis angeordnet. Eine gemeinsame Antriebseinrichtung dreht das Probenrad und das Filterrad gleichförmig oder schrittweise kontinuierlich jeweils um eine normal zur Kreisebene durch das Kreiszentrum verlaufende Achse, wobei die Proben des Probenrads nacheinander zusammen mit einem zugeordneten Filter des Filterrads in den optischen Strahlengang eines photometrischen Meßgeräts gebracht wird. Jede Probe wird aber stets mit ein und demselben Filter zusammengebracht, dessen Filterwellenlänge dem jeweils zu messenden Parameter entsprechend gewählt ist. Jede Probe wird damit bei einer einzigen Wellenlänge monochromatisch gemessen.

Aufgabe der Erfindung ist es, einen Weg zu zeigen, wie bei einem für die Reihenuntersuchung mehrerer Proben eingerichteten, polychromatischen Photometer mit relativ geringem konstruktivem Aufwand der Zeitaufwand für die Untersuchung der Proben bei mehreren unterschiedlichen Lichtwellenlängen verringert werden kann.

Ausgehend von dem eingangs näher erläuterten Photometer wird diese Aufgabe dadurch gelöst, daß die Antriebseinrichtung sowohl das Probenrad als auch das Filterrad kontinuierlich dreht, daß das Verhältnis der Winkelgeschwindigkeit des Probenrads zur Winkelgeschwindigkeit des Filterrads gleich dem Verhältnis der Zahl der Filter zur Zahl der Proben ist und daß die Zahl der Proben und die Zahl der Filter keinen gemeinsamen, ganzzahligen Teiler haben.

Bei dieser Betriebsweise kommt jede der Proben im Verlauf eines Zyklus mit jedem der Filter einmal im Strahlengang des photometrischen Meßgeräts exakt zur Deckung. Die Zyklusdauer, die sich aus der Zahl der möglichen Kombinationen verschiedener Proben und Filter ergibt, wird durch die Zeitspannen, während denen sich das Probenrad und das Filterrad über die Zwischenräume zwischen den Proben bzw. zwischen den Filtern bewegen, nur unwesentlich beeinflußt.

Das Probenrad und das Filterrad können durch gesonderte Motoren angetrieben sein, sofern sichergestellt ist, daß deren Drehbewegungen synchron zum Zyklus verlaufen. Dies läßt sich am einfachsten bei elektrischen Schrittschaltmotoren erreichen. In einer bevorzugten Ausführungsform ist jedoch vorgesehen, daß das Probenrad und das Filterrad über ein mechanisches Getriebe drehfest miteinander gekuppelt und von einem gemeinsamen Motor angetrieben sind. Das Getriebe sorgt für die erforderliche winkelstarre Synchronisierung. Bei dem Motor kann es sich wiederum um einen elektrischen Schrittschaltmotor handeln.

Zur einer relativ einfachen Getriebekonstruktion gelangt man, wenn der Motor das Filterrad direkt antreibt und das Getriebe zwischen Filterrad und Probenrad geschaltet ist. Der Durchmesser der Getrieberäder ist relativ groß. Die Getrieberäder dürfen andererseits nicht in den Strahlengang des photometrischen Meßgeräts ragen, während der Durchmesser des Filterrads und insbesondere des Probenrads wegen der bei Drehung auftretenden Zentrifugalkräfte keine allzu großen Durchmesser haben sollen.

Diesen Forderungen genügt eine Ausführungsform, bei der das Getriebe eine Antriebswelle, eine Abtriebswelle und eine über ein Zahnradgetriebe mit der Antriebswelle und über ein Riemengetriebe mit der Abtriebswelle drehfest gekuppelte Zwischenwelle aufweist. Das Zahnradgetriebe umfaßt lediglich ein auf der Antriebswelle sitzendes Zahnrad und ein damit kämmendes, auf der Zwischenwelle sitzendes Zahnrad. Das Riemengetriebe, bei dem es sich bevorzugt um ein Zahnriemengetriebe handelt, kann problemlos an der Antriebswelle vorbeigeführt werden, die in der Nachbarschaft der Abtriebswelle sitzen muß, wenn das Filterrad gemeinsam mit dem Probenrad in den Strahlengang des Meßgeräts hineinragen soll. Zweckmäßigerweise hat das Riemengetriebe ein Übersetzungsverhältnis von 1 : 1.

Das vorstehend erläuterte Riemengetriebe mit Zwischenwelle erübrigt sich, wenn das Getriebe als Zahnradgetriebe ausgebildet ist, dessen in den Strahlengang des photometrischen Meßgeräts eingreifendes Zahnrad bzw. eingreifende Zahnräder an den gemeinsam mit den Proben des Probenrads bzw. Filtern des Filterrads im Strahlengang sich befindenden Stellen Lichtdurchtrittsöffnungen aufweisen. Soweit die Zahl der auf einem Kreis um die Welle des Zahnrads herum angeordneten Lichtdurchtrittsöffnungen klein ist, entstehen keine Probleme. Mit wachsender Anzahl der Lichtdurchtrittsöffnungen kann jedoch der Materialquerschnitt zwischen den Lichtdurchtrittsöffnungen so klein werden, daß die Festigkeit des Zahnrads darunter leidet. In einer bevorzugten Ausführungsform wird deshalb ein photometrisches Meßgerät benutzt, welches eine Optik aufweist, die in der Ebene der Lichtdurchtrittsöffnungen ein Zwischenbild erzeugt. Aufgrund der Zwischenabbildung kann der Durchmesser der Lichtdurchtrittsöffnungen stark verkleinert werden, so daß auch eine hohe Zahl von Lichtdurchtrittsöffnungen ohne Beeinträchtigung der mechanischen Eigenschaften des Zahnrads nebeneinander Platz findet. Das Getriebe weist in seiner einfachsten Ausführungsform zwei parallel zur optischen Achse des photometrischen Meßgeräts drehende Wellen auf, von denen die eine das Probenrad sowie ein erstes Zahnrad und die andere das Filterrad sowie ein mit dem ersten Zahnrad kämmendes zweites Zahnrad trägt. Da üblicherweise mehr Proben als Filter vorgesehen sind, sind die Durchtrittsöffnungen bevorzugt im ersten Zahnrad vorgesehen.

Die Drehachsen des Probenrads und des Filterrads verlaufen bevorzugt vertikal, wobei das Probenrad über dem Filterrad angeordnet ist und so ohne Behinderung durch das Filterrad mit den Proben beschickt werden kann.

Die einfachste Möglichkeit der Indexierung der Kombinationen der Proben und Filter besteht darin, dem Probenrad und dem Filterrad je einen die Zahl der Umdrehungen in jedem Zyklus zählenden Zähler zuzuordnen. Bei diesen Zählern kann es sich um elektrische Zähler handeln, deren maximaler Zählinhalt gleich der Zahl der Proben bzw. Filter ist.

Das Ausgangssignal des im Strahlengang angeordneten Photoempfängers des photometrischen Meßgeräts hängt im wesentlichen von der spektralen Emissionscharakteristik der Lichtquelle, dem Transmissionsgrad der einzelnen Filter und seiner eigenen spektralen Empfindlichkeitscharakteristik ab. Der Photoempfänger hat jedoch lediglich einen begrenzten Dynamikbereich, der bei der Messung einzuhalten ist, wenn der Meßfehler möglichst klein bleiben soll. Um sicherzustellen, daß der Photoempfänger stets in seinem optimalen Dynamikbereich arbeitet, weist das photometrische Meßgerät bevorzugt eine Blitzlampe als Lichtquelle auf, welche aus einer elektrischen Energiequelle steuerbarer Leistung gespeist wird, wobei eine Steuerung die Leistung der Energiequelle abhängig von der Drehstellung des Filterrads einstellt.

Die Steuerung kann für jedes Filter des Filterrads ein Einstellglied aufweisen, an welchem die dem Filter jeweils zugeordnete Leistung der Energiequelle eingestellt werden kann. Im Verlauf der Lebensdauer der Blitzlampe können sich jedoch deren Eigenschaften verändern, so daß die Einstellglieder neu justiert werden müßten. Um den Justiervorgang zu automatisieren, kann bei einem photometrischen Meßgerät, welches einen die Intensität des Lichts vor Durchtritt durch die Proben messenden Referenzkanal aufweist, vorgesehen sein, daß die Steuerung einen Sollwertspeicher für die den einzelnen Filtern des Filterrads zugeordneten, die Leistung der Energiequelle festlegenden Signale des Referenzkanals aufweist. Diese Sollwertsignale werden bei Inbetriebnahme des Photometers während einer ersten Umdrehung des Filterrads gespeichert.

Im folgenden sollen Ausführungsbeispiele der Erfindung anhand von Zeichnungen näher erläutert werden. Es zeigt

Figur 1 einen schematischen Schnitt durch die mechanische Konstruktion einer ersten Ausführungsform eines polychromatischen Photometers ;

Figur 2 ein Blockschaltbild der elektrischen Konstruktion des Photometers nach Fig. 1 und

Figur 3 einen schematischen Schnitt durch die mechanische Konstruktion einer zweiten Ausführungsform eines polychromatischen Photometers.

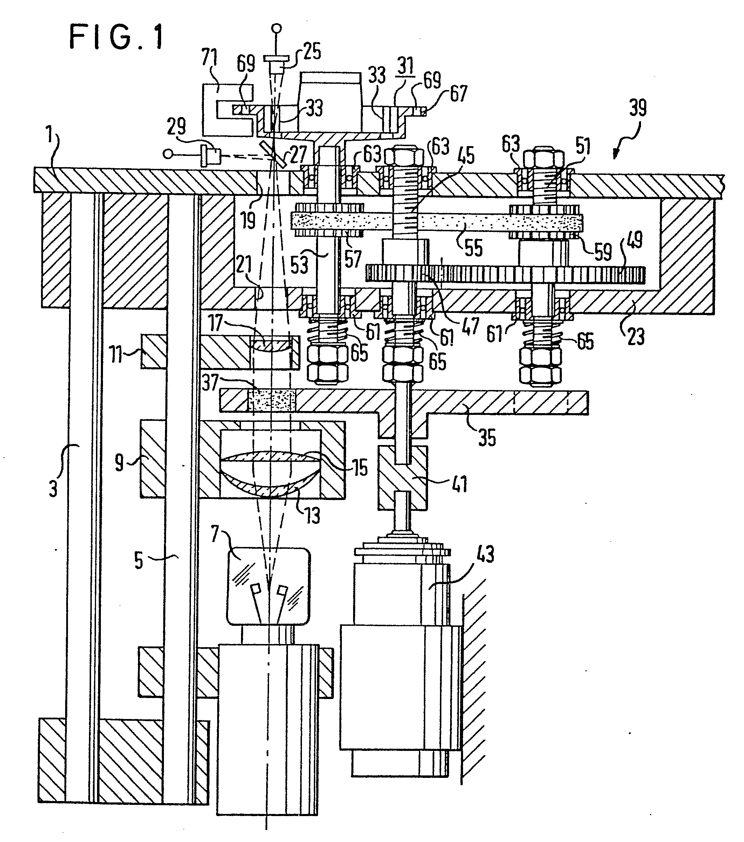

Fig. 1 zeigt eine im wesentlichen horizontale Grundplatte 1, von deren Unterseite ein Rahmen 3 mit einer Führung 5 im wesentlichen vertikal nach unten absteht. An der Führung 5 sind nach Art einer optischen Bank eine Blitzlichtquelle 7 sowie zwei Linsenträger 9, 11 relativ zueinander justierbar gehalten. Der Linsenträger 9 trägt Kondensorlinsen 13, 15, während der Linsenträger 11 eine Sammellinse 17 aufweist, die die von den Kondensorlinsen 13, 15 kommenden, parallelen Lichtstrahlen an einer oberhalb der Grundplatte 1 liegenden Stelle bündelt. Die Lichtstrahlen treten durch Öffnungen 19, 21 der Grundplatte 1 bzw. eines mit ihr verbundenen Getriebegehäuses 23 und werden von einem in der optischen Achse angeordneten Photodetektor 25 aufgenommen. Ein oberhalb der Grundplatte 1 angeordneter Strahlteiler 27 lenkt einen Teil der Lichtstrahlen zu einem Referenz-Photodetektor 29 hin ab. In der Brennpunktebene der Sammellinse 17 ist ein um eine vertikale Achse drehbares Probenrad 31 angeordnet, welches mehrere mit gleichem Winkelabstand voneinander auf einem zentrischen Kreis angeordnete Küvetten 33 für die zu untersuchenden Proben trägt. In einer horizontalen Ebene zwischen den Linsenträgern 9 und 11 ist ferner ein um eine vertikale Achse drehbares Filterrad 35 angeordnet, welches auf einem zentrischen Kreis um seine Drehachse mehrere Filter 37 mit jeweils unterschiedlichen Durchlaß-

wellenlängen trägt. Die Filter 37 haben gleichen Winkelabstand voneinander. Die Proben der Küvetten 33 können somit entsprechend der Stellung des Filterrads 35 bei verschiedenen Lichtwellenlängen photometrisch vermessen werden. Der Photodetektor 25 liefert hierbei ein der Lichtintensität nach Durchtritt durch die Probe proportionales Signal. Das der Lichtintensität vor Eintritt in die Probe proportionale Signal des Referenz-Photodetektors 29 wird, wie üblich, zum Eliminieren von Intensitätsschwankungen der Lichtquelle ausgenutzt.

Das Probenrad 31 ist über ein Getriebe 39 drehwinkelstarr mit dem Filterrad 35 gekuppelt. Ein mit dem Filterrad 35 über ein Kupplungsstück 41 direkt gekuppelter Elektromotor 43 treibt das Filterrad 35 und das Probenrad 31 mit gleichförmigen Drehzahlen an. Das Verhältnis der Drehzahl bzw. Winkelgeschwindigkeit des Probenrads 31 zur Drehzahl bzw. Winkelgeschwindigkeit des Filterrads 35 ist gleich dem Verhältnis der Zahl der Filter 37 des Filterrads 35 zur Zahl der Küvetten 33 des Probenrads 31 gewählt. Weiterhin ist die Zahl der Küvetten 33 und die Zahl der Filter 37 so gewählt, daß diese Zahlen keinen gemeinsamen, ganzzahligen Teiler haben. Beispielsweise kann das Probenrad 31 fünfundzwanzig mit gleichem Winkelabstand auf einem Kreis um die Drehachse angeordnete Küvetten tragen, während das Filterrad 35 neun mit gleichem Winkelabstand auf einem Kreis um die Drehachse des Filterrads angeordnete, unterschiedliche Filter trägt. Das Getriebe 39 muß damit ein Untersetzungsverhältnis von 25 : 9 haben, womit das Probenrad 31 beispielsweise mit einer Drehzahl von 360 Umdrehungen pro Minute rotiert, wenn das Filterrad 35 mit einer Drehzahl von 1 000 Umdrehungen pro Minute angetrieben wird. Im Verlauf der Drehung von Probenrad 31 und Filterrad 35 wird jede der Küvetten 33 mit jedem der Filter 37 im Strahlengang des Photometers zur Deckung gebracht.

Das Filterrad 35 ist auf eine Antriebswelle 45 des Getriebes 39 aufgekeilt, auf der innerhalb des Getriebegehäuses 23 ein Ritzel 47 sitzt. Das Ritzel 47 kämmt mit einem Zahnrad 49 auf einer Zwischenwelle 51. Die Zwischenwelle 51 ist auf der im Strahlengang des Photometers abgekehrten Seite der Antriebswelle 45 achsparallel zur Antriebswelle 45 in dem Getriebegehäuse 23 gelagert. Das Probenrad 31 sitzt drehfest auf einer Abtriebswelle 53, die über einen Zahnriemen 55 von der Zwischenwelle 51 aus angetrieben wird. Der Zahnriemen 55 läuft über durchmessergleiche Zahnriemenscheiben 57 bzw. 59 der Abtriebswelle 53 bzw. der Zwischenwelle 51. Die Abtriebswelle 53 ist ebenso wie die achsparallel zu ihr verlaufende Antriebswelle 45 bzw. Zwischenwelle 51 in je zwei Wälzlagern 61 bzw. 63 gelagert. Auf jeder der Wellen sitzt ferner eine Druckfeder 65 zum Ausgleich axialen Lagerspiels.

Zur Synchronisierung des Betriebs der Blitzlichtquelle 7 mit der Drehstellung des Probenrads 31 sind in einem radial nach außen abstehenden Flansch 67 des Probenrads 31 Löcher 69 vorgesehen, die von einer Lichtschranke 71 abgetastet werden. Die Blitzlichtquelle 7 wird ausgelöst, wenn sich die Küvette 33 zusammen mit einem der Filter 37 im Strahlengang des Photometers befindet.

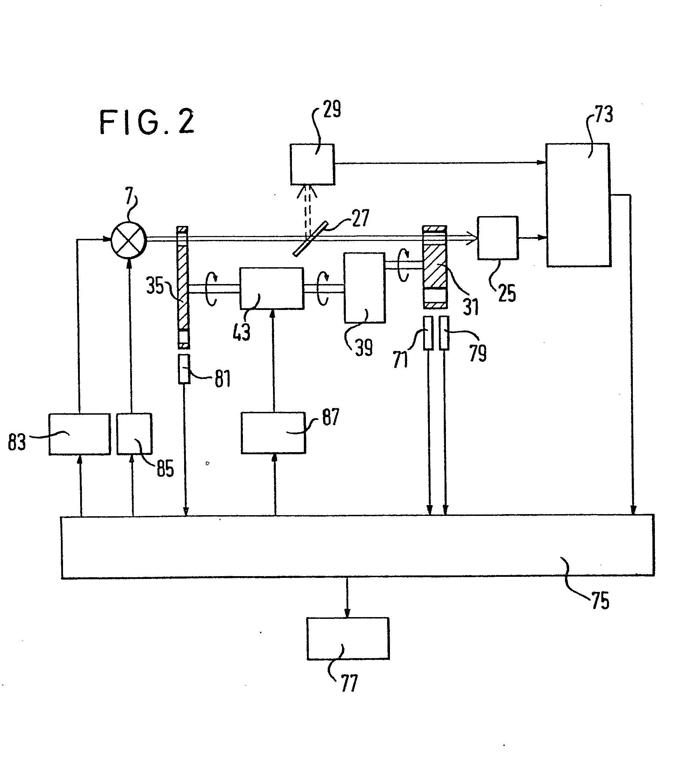

Fig. 2 zeigt das Schaltbild des Photometers, wobei gleichwirkende Teile der Fig. 1 mit gleichen Bezugszahlen bezeichnet sind. Zur Erläuterung dieser' Teile wird auf die Beschreibung der Fig. 1 verwiesen. Das der Intensität des Lichts der Blitzlichtquelle 7 nach Durchtritt durch die Küvette des Probenrads 31 proportionale Ausgangssignal des Photodetektors 25 wird einem logarithmischen Differenzverstärker 73 zugeführt, der es logarithmiert und dann um das ebenfalls logarithmierte Signal des Referenz-Photodetektors 29 vermindert. Das Ausgangssignal des logarithmischen Differenzverstärkers 73 wird über eine Steuerschaltung 75 einer Anzeigeeinrichtung 77 zugeführt. Die Anzeigeeinrichtung 77 zeigt damit die Extinktion der Probe an. Dem Probenrad 31 und dem Filterrad 35 ist je ein berührungsfrei arbeitender Sensor 79 bzw. 81 zugeordnet, der pro Umdrehung des Probenrads 31 bzw. Filterrads 35 je einen Impuls an die Steuerschaltung 75 abgibt. Die Steuerschaltung 75 enthält nicht näher dargestellte Zähler, deren maximaler Zählinhalt gleich der Anzahl der Küvetten bzw. Filter ist. Der Zählerinhalt der dem Probenrad 31 und dem Filterrad 35 zugeordneten Zähler erlaubt eine eindeutige Zuordnung der Meßergebnisse zu den Kombinationen der einzelnen Proben mit verschiedenen Filtern. Die Blitzlichtquelle 7 wird über eine Energiesteuerschaltung 83 mit Hochspannung versorgt. Die Energie-steuerschaltung 83 wird abhängig von der Stellung des Filterrads 35 über die Steuerschaltung 75 so gesteuert, daß die Intensität des am Ort der Photodetektoren 25, 29 ankommenden Lichts trotz wechselnder Abschwächung durch unterschiedliche Filter im Dynamikbereich der Photodetektoren 25, 29 liegt. Die Steuerschaltung 75 weist für jedes der Filter 37 ein Einstellglied auf, an welchem die von der Energiesteuerschaltung 83 jeweils abzugebende Leistung eingestellt werden kann. Alternativ kann die Steuerschaltung 75 einen mit dem Photodetektor 29 verbundenen Sollwertspeicher aufweisen, in den bei einem Probelauf bei Inbetriebnahme des Photometers ein dem Ausgangssignal des Photodetektors 29 entsprechendes Signal eingeschrieben werden kann. Im nachfolgenden Meßbetrieb bestimmt das gespeicherte Signal die von der Energiesteuerschaltung 83 abzugebende Leistung. Der Zündzeitpunkt der Blitzlichtquelle 7 wird durch eine über die Lichtschranke 71 und die Steuerschaltung 75 ausgelöste Triggerstufe 85 gesteuert. Die Drehzahl des Motors 43 wird mittels einer Drehzahlregelung 87 konstant gehalten.

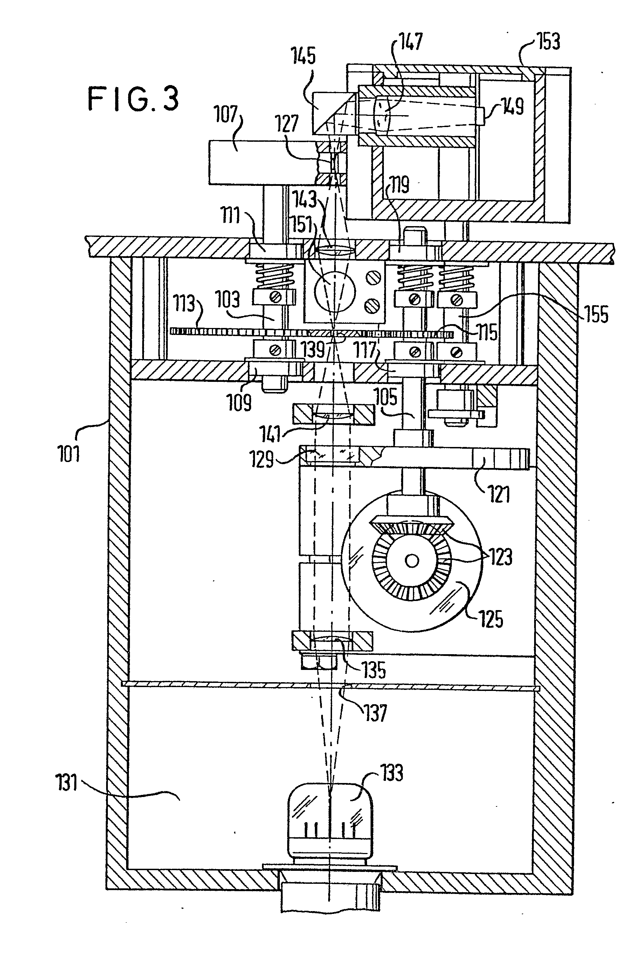

Fig. 3 zeigt die mechanische Konstruktion einer zweiten Ausführungsform eines polychromatischen Photometers, die zusammen mit der Schaltung nach Fig. 2 betrieben werden kann.

Das Photometer umfaßt ein Gehäuse 101, an dem zwei um vertikale Achsen drehbare Wellen 103, 105 gelagert sind. Die Welle 103 trägt an ihrem nach oben aus dem Gehäuse 101 austretenden Ende ein Probenrad 107 und zwischen ihren beiden in axialer Richtung vorgespannten Lagern 109, 111 ein Zahnrad 113. Das Zahnrad 113 kämmt mit einem Zahnrad 115, welches zwischen den beiden ebenfalls axial vorgespannten Lagern 117, 119 der anderen Welle 105 sitzt. Die Welle 105 trägt an ihrem nach unten abstehenden Ende ein Filterrad 121 und ist über ein Kegelradgetriebe 123 mit einem Elektromotor 125 gekuppelt. Das Probenrad 107 trägt auf einem Kreis um seine Drehachse mit gleichem Winkelsabstand angeordnete Küvetten 127, während das Filterrad 121 auf einem Kreis um seine Drehachse mit gleichem Winkelabstand angeordnete Filter 129 trägt. Das Untersetzungsverhältnis des aus den Zahnrädern 113, 115 gebildeten Getriebes ist entsprechend dem Untersetzungsverhältnis des Getriebes 39 des Photometers nach Fig. 1 bemessen.

In einer Kammer 131 des Gehäuses 1 ist eine Blitzlampe 133 angeordnet. Eine gehäusefeste Kondensorlinse 135 beleuchtet die Filter 129 mit dem aus einer Blendenöffnung 137 austretenden Licht der Blitzlampe 133. Da der Strahlengang des photometrischen Meßgeräts zwischen den Wellen 103, 105 verläuft und durch das Zahnrad 113 abgedeckt ist, sind an den mit der Lage der Küvetten 127 des Probenrads 107 übereinstimmenden Stellen des Zahnrads 113 Öffnungen 139 vorgesehen, durch die das Licht hindurchtreten kann. Um den Durchmesser der Öffnungen 139 möglichst klein zu halten, erzeugt eine Sammellinse 141 ein Zwischenbild in der Ebene des Zahnrads 113. Ein Objektiv 143 bildet das Zwischenbild in ein weiteres Zwischenbild in der Ebene der Küvetten 127 des Probenrads 107 ab. Ein Umlenkprisma oder Umlenkspiegel 145 lenkt den Strahlengang zu einem weiteren Objektiv 147 hin um, welches die Meßfläche eines Photodetektors 149 beleuchtet. Ein zwischen der Öffnung 139 und dem Objektiv 143 angeordneter Strahlteiler 151 lenkt einen Teil des Lichts senkrecht zur Darstellungsebene der Fig. 3 zu einem nicht dargestellten Referenz-Photodetektor um. Der Umlenkspiegel 145, das Objektiv 147 und der Photodetektor 149 sind an einem Kopf 153 angebracht, der seinerseits an einer parallel zu den Wellen 103, 105 verlaufenden Welle 155 drehbar an dem Gehäuse 101 gehalten ist. An dem Kopf 153 können weitere Photodetektoren mit zugehörigem Umlenkspiegel und zugehörigem Objektiv angebracht sein, die durch Drehen des Kopfs 153 in den Strahlengang eingeschaltet werden können.

**Ansprüche**

1. Polychromatisches Photometer, mit einem mehrere auf einem Kreis im gleichen Winkelabstand angeordnete Proben (33 ; 127) tragenden Probenrad (31 ; 107), einem mehrere auf einem Kreis im gleichen Winkelabstand angeordnete Filter (37 ; 129) tragenden Filterrad (35 ; 121) und einer Antriebseinrichtung (39, 43 ; 125), die das Probenrad und das Filterrad jeweils um eine normal zur Kreisebene durch das Kreiszentrum verlaufende Achse dreht und jede Probe des Probenrads nacheinander zusammen mit wechselnden, verschiedenen Filtern des Filterrads in den optischen Strahlengang eines photometrischen Meßgeräts bringt, dadurch gekennzeichnet, daß die Antriebseinrichtung (39, 43 ; 125) sowohl das Probenrad (31 ; 107) als auch das Filterrad (35 ; 121) gleichförmig oder schrittweise kontinuierlich dreht, daß das Verhältnis der Winkelgeschwindigkeit des Probenrads (31 ; 107) zur Winkelgeschwindigkeit des Filterrads (35 ; 121) gleich dem Verhältnis der Zahl der Filter (37 ; 129) zur Zahl der Proben (33 ; 127) ist und daß die Zahl der Proben (33 ; 127) und die Zahl der Filter (37 ; 129) keinen gemeinsamen ganzzahligen Teiler haben.

2. Photometer nach Anspruch 1, dadurch gekennzeichnet, daß das Probenrad (31 ; 107) und das Filterrad (35 ; 121) über ein mechanisches Getriebe (39 ; 113, 115) drehfest miteinander gekuppelt und von einem gemeinsamen Motor (43 ; 125) angetrieben sind.

3. Photometer nach Anspruch 2, dadurch gekennzeichnet, daß der Motor (43 ; 125) das Filterrad (35 ; 121) antreibt und daß das Getriebe (39 ; 113, 115) zwischen Filterrad (35 ; 121) und Probenrad (31 ; 107) geschaltet ist.

4. Photometer nach Anspruch 2, dadurch gekennzeichnet, daß das Getriebe (39) eine Antriebswelle (45), eine Abtriebswelle (53) und eine über ein Zahnradgetriebe (47, 49) mit der Antriebswelle (45) und über ein Riemengetriebe (55) mit der Abtriebswelle (53) drehfest gekuppelte Zwischenwelle (51) aufweist.

5. Photometer nach Anspruch 4, dadurch gekennzeichnet, daß das Zahnradgetriebe (47, 49) ein auf der Antriebswelle (45) sitzendes Zahnrad (47) und ein damit kämmendes, auf der Zwischenwelle (51) sitzendes Zahnrad (49) umfaßt.

6. Photometer nach Anspruch 4, dadurch gekennzeichnet, daß das Riemengetriebe (55) ein Übersetzungsverhältnis 1 : 1 hat.

7. Photometer nach Anspruch 2, dadurch gekennzeichnet, daß das Getriebe als Zahnradgetriebe (113, 115) ausgebildet ist, dessen in den Strahlengang des photometrischen Meßgeräts eingreifendes Zahnrad (113) bzw. eingreifende Zahnräder an den gemeinsam mit den Proben (127) des Probenrads (107) bzw. Filtern (129) des Filterrads (121) im Strahlengang sich befindenden Stellen Lichtdurchtrittsöffnungen (139) aufweisen.

8. Photometer nach Anspruch 7, dadurch gekennzeichnet, daß das photometrische Meßgerät eine Optik (141) aufweist, die in der Ebene der Lichtdurchtrittsöffnungen (139) ein Zwischenbild erzeugt.

9. Photometer nach Anspruch 7, dadurch gekennzeichnet, daß das Getriebe zwei parallel zur optischen Achse des photometrischen Meßgeräts drehende Wellen (103, 105) aufweist, von denen die eine (103) das Probenrad (107) sowie ein erstes Zahnrad (113) und die andere (105) das Filterrad (121) sowie ein mit dem ersten Zahnrad (113) kämmendes zweites Zahnrad (115) trägt.

10. Photometer nach Anspruch 9, dadurch gekennzeichnet, daß die Durchtrittsöffnungen (139) im ersten Zahnrad (113) vorgesehen sind.

11. Photometer nach Anspruch 2, dadurch gekennzeichnet, daß die Drehachsen des Probenrads (31 ; 107) und des Filterrads (35 ; 121) vertikal verlaufen und daß das Probenrad (31 ; 107) über dem Filterrad (35 ; 121) angeordnet ist.

12. Photometer nach Anspruch 1, dadurch gekennzeichnet, daß dem Probenrad (31 ; 107) und dem Filterrad (35 ; 121) je ein die Zahl der Umdrehungen zählender Zähler zugeordnet ist.

13. Photometer nach Anspruch 1, dadurch gekennzeichnet, daß das photometrische Meßgerät eine Blitzlampe (7 ; 133) als Lichtquelle aufweist.

14. Photometer nach Anspruch 13, dadurch gekennzeichnet, daß die Blitzlampe (7) aus einer elektrischen Energiequelle (83) steuerbarer Leistung gespeist wird und daß eine Steuerung (75) die Leistung der Energiequelle (83) abhängig von der Drehstellung des Filterrads (35) einstellt.

15. Photometer nach Anspruch 13, dadurch gekennzeichnet, daß das photometrische Meßgerät einen die Intensität des Lichts vor Durchtritt durch die Proben (33 ; 127) messenden Referenzkanal (29) aufweist und daß die Steuerung (75) einen Sollwert-speicher für die den einzelnen Filtern (37 ; 127) des Filterrads (35 ; 121) zugeordneten, die Leistung der Energiequelle (83) festlegenden Signale des Referenzkanals (29) aufweist.

**Claims**

1. Polychromatic photometer with a sample wheel (31 ; 107) carrying several samples (33 ; 127) arranged on a circle with the same angular distance, a filter wheel (35 ; 121) carrying several filters (37 ; 129) arranged on a circle with the same angular distance and a driving device (39 ; 43 ; 125) which rotates the sample wheel and the filter wheel, in each case around an axis running through the centre of the circle normal to the plane of the circle and brings each sample of the sample wheel successively together with changing, different filters of the filter wheel into the optical beam path of a photometric measuring apparatus, characterised in that the driving device (39 ; 43 ; 125) as well as the sample wheel (31 ; 107) and also the filter wheel (35 ; 121), rotate continuously uniformly or stepwise, that the ratio of the angular velocity of the sample wheel (31 ; 107) to the angular velocity of the filter wheel (35 ; 121) is the same as the ratio of the number of filters (37 ; 129) to the number of the samples (33 ; 127) and that the number of the samples (33 ; 127) and the number of filters (37 ; 129) do not have a common whole-numbered submultiple.

2. Photometer according to claim 1, characterised in that the sample wheel (31 ; 107) and the filter wheel (35 ; 121) are non-rotatably coupled with one another via a mechanical drive (39 ; 113 ; 115) and are driven by a common motor (43 ; 125).

3. Photometer according to claim 2, characterised in that the motor (43 ; 125) drives the filter wheel (35 ; 121) and that the drive (39 ; 113 ; 115) is inserted between the filter wheel (35 ; 121) and the sample wheel (31 ; 107).

4. Photometer according to claim 2, characterised in that the drive (39) has a driving shaft (45), a driving shaft (53) and an intermediate shaft (51) non-rotatably coupled via a toothed wheel gear (47, 49) with the driving shaft (45) and via a belt drive (55) with the driving shaft (53).

5. Photometer according to claim 4, characterised in that the toothed wheel gear (47, 49) includes a toothed wheel (47) seated on the driving shaft (45) and a toothed wheel (49) engaging therewith and seated on the intermediate shaft (51).

6. Photometer according to claim 4, characterised in that the belt drive (55) has a transmission ratio of 1 : 1.

7. Photometer according to claim 2, characterised in that the drive is constructed as a toothed wheel gear (113, 115), the toothed wheel (113) or toothed wheels of which entering into the beam path of the photometric measuring apparatus have light passage openings (139) on the places present commonly with the samples (127) of the sample wheel (107) or filters (129) of the filter wheel (121) in the beam path.

8. Photometer according to claim 7, characterised in that the photometric measuring apparatus has an optical system (141) which produces an intermediate image in the plane of the light passage openings (139).

9. Photometer according to claim 7, characterised in that the drive has two shafts (103, 105) rotating parallel to the optical axis of the photometric measuring apparatus, one of which (103) carries the sample wheel (107), as well as a first toothed wheel (113), and the other (105) carries the filter wheel (121), as well as a second toothed wheel (115) engaging with the first toothed wheel (113).

10. Photometer according to claim 9, characterised in that the passage openings (139) are provided in the first toothed wheel (113).

11. Photometer according to claim 2, characterised in that the axes of rotation of the sample wheel (31 ; 107) and of the filter wheel (35 ; 121) run vertically and that the sample wheel (31 ; 107) is arranged above the filter wheel (35 ; 121).

12. Photometer according to claim 1, characterised in that with the sample wheel (31 ; 107) and the filter wheel (35 ; 121) there is, in each case, associated a counter counting the number of rotations.

13. Photometer according to claim 1, characterised in that the photometric measuring apparatus has a flashlight (7 ; 133) as source of light.

14. Photometer according to claim 13, characterised in that the flashlight (7) is supplied from a source of electric energy (83) of controllable output and that a control (75) adjusts the output of the source of energy (83) in dependence upon the rotational position of the filter wheel (35).

15. Photometer according to claim 13, characterised in that the photometric measuring apparatus has a reference canal (29) measuring the intensity of the light before passage through the samples (33 ; 127) and that the control (75) has a desired value store for the signals of the reference canal (29) associated with the individual filters (37 ; 127) of the filter wheel (35 ; 121) determining the output of the source of energy (83).

## Revendications

1. Photomètre polychromatique comportant une roue porte-échantillons (31 ; 107) portant plusieurs échantillons (33 ; 127) disposés avec le même écart angulaire sur un cercle, une roue porte-filtres (35 ; 121) portant plusieurs filtres (37 ; 129) disposés avec le même écart angulaire sur un cercle et un dispositif de commande (39, 43 ; 125) qui entraîne en rotation la roue porte-échantillons et la roue porte-filtres respectivement autour d'axes normaux au plan du cercle passant par le centre du cercle et qui amène successivement chaque échantillon de la roue porte-échantillons conjointement avec en alternance différents filtres de la roue porte-filtres dans la trajectoire optique d'un appareil de mesure photométrique, caractérisé en ce que le dispositif de commande (39, 43 ; 125) entraîne en rotation de manière uniforme ou pas à pas en continu aussi bien la roue porte-échantillons (31 ; 107) que la roue porte-filtres (35 ; 121), en ce que le rapport de la vitesse angulaire de la roue porte-échantillons (31 ; 107) à la vitesse angulaire de la roue porte-filtres (35 ; 121) est égal au rapport du nombre de filtres (37 ; 129) au nombre d'échantillons (33 ; 127) et en ce que le nombre des échantillons (33 ; 127) et le nombre des filtres (37 ; 129) n'ont pas de diviseur entier commun.

2. Photomètre selon la revendication 1, caractérisé en ce que la roue porte-échantillons (31 ; 107) et la roue porte-filtres (35 ; 121) sont accouplées ensemble en rotation par l'intermédiaire d'une transmission mécanique (39 ; 113, 115) et sont entraînées au moyen d'un moteur commun (43 ; 125).

3. Photomètre selon la revendication 2, caractérisé en ce que le moteur (43 ; 125) entraîne la roue porte-filtres (35 ; 121) et en ce que la transmission (39 ; 113, 115) est disposée entre la roue porte-filtres (35 ; 121) et la roue porte-échantillons (31 ; 107).

4. Photomètre selon la revendication 2, caractérisé en ce que la transmission (39) comprend un arbre menant (45), un arbre mené (53) et un arbre intermédiaire (51) accouplé en rotation avec l'arbre menant (45) par l'intermédiaire d'une transmission à engrenages (47, 49) et avec l'arbre mené (53) par l'intermédiaire d'une transmission à courroie (55).

5. Photomètre selon la revendication 4, caractérisé en ce que la transmission à engrenages (47, 49) comprend une roue dentée (47) montée sur l'arbre menant (45) et une roue dentée (49) montée sur l'arbre intermédiaire (51) et engrenant avec la première.

6. Photomètre selon la revendication 4, caractérisé en ce que la transmission à courroie (55) a un rapport de réduction de 1 : 1.

7. Photomètre selon la revendication 2, caractérisé en ce que la transmission est constituée sous forme d'une transmission à engrenages (113, 115) dont la roue dentée (113) ou les roues dentées pénétrant dans la trajectoire optique de l'appareil de mesure photométrique comportent des ouvertures (139) pour le passage de la lumière aux endroits se trouvant conjointement avec les échantillons (127) de la roue porte-échantillons (107) et les filtres (129) de la roue porte-filtres (121) dans la trajectoire optique.

8. Photomètre selon la revendication 7, caractérisé en ce que l'appareil de mesure photométrique comporte une optique (141) qui produit une image intermédiaire dans le plan des ouvertures (139) pour le passage de la lumière.

9. Photomètre selon la revendication 7, caractérisé en ce que la transmission comprend deux arbres (103, 105) tournant parallèlement à l'axe optique de l'appareil de mesure photométrique dont l'un (103) supporte la roue porte-échantillons (107) ainsi qu'une première roue dentée (113) et dont l'autre (105) porte la roue porte-filtres (121) ainsi qu'une deuxième roue dentée (115) engrénant avec la première roue dentée (113).

10. Photomètre selon la revendication 9, caractérisé en ce que les ouvertures de passage (139) sont prévues dans la première roue dentée (113).

11. Photomètre selon la revendication 2, caractérisé en ce que les axes de rotation de la roue porte-échantillons (31 ; 107) et de la roue porte-filtres (35 ; 121) s'étendent dans le sens vertical et en ce que la roue porte-échantillons (31 ; 107) est disposée au-dessus de la roue porte-filtres (35 ; 121).

12. Photomètre selon la revendication 1, caractérisé en ce qu'un compteur comptant le nombre de tours est associé à chacune des roues porte-échantillons (31 ; 107) et porte-filtres (35 ; 121).

13. Photomètre selon la revendication 1, caractérisé en ce que l'appareil de mesure photométrique comporte une lampe flash (7 ; 133) comme source lumineuse.

14. Photomètre selon la revendication 13, caractérisé en ce que la lampe flash (7) est alimentée à partir d'une source d'énergie électrique (83) de puissance réglable et en ce qu'une commande (75) ajuste la puissance de la source d'énergie (83) en fonction de la position angulaire de la roue porte-filtres (35).

15. Photomètre selon la revendication 13, caractérisé en ce que l'appareil de mesure photométrique comprend un canal de référence (29) mesurant l'intensité de la lumière avant le passage à travers les échantillons (33 ; 127) et en ce que la commande (75) comprend une mémoire de la valeur de consigne pour les signaux du canal de référence (29) qui sont associés aux différents filtres (37 ; 127) de la roue porte-filtres (35 ; 121) et qui déterminent la puissance de la source d'énergie (83).

FIG.1

FIG. 2

0 023 337

# FIG.3